# EUROPEAN PATENT APPLICATION

(11) **EP 4 726 908 A1**
(43) Date of publication of application: **15.04.2026**
(21) Application number: 24852228.6
(22) Date of filing: 02.08.2024
(51) Int. Cl.: H01M 50/595, H01M 10/04, H01M 50/167

(54) **CYLINDRICAL SECONDARY BATTERY**

(30) Priority: 04.08.2023 KR 20230102377
(71) Applicant: LG Energy Solution, Ltd., Seoul 07335 (KR)
(72) Inventor: JEONG, Ji Woo, Daejeon 34122 (KR); BYUN, Jin Seul, Daejeon 34122 (KR); KIM, Hyoung Kwon, Daejeon 34122 (KR)
(74) Representative: Goddar, Heinz J.
(86) International application number: PCT/KR2024/011428
(87) International publication number: WO 2025/033874

(57) **Abstract**

The present disclosure relates to a cylindrical secondary battery, and more specifically, to a cylindrical secondary battery capable of suppressing the upward movement of an electrode assembly inside a battery can even when the battery can is heated. A cylindrical secondary battery according to the present disclosure includes a battery can having an open top end portion, an electrode assembly accommodated in the battery can, a top cap assembly coupled to the top end portion of the battery can and formed with a gas outlet for discharging gases generated inside the battery can, and a thermal expansion tape attached to an upper region of the inner wall of the battery can and expanding when the battery can is heated, thereby suppressing the upward movement of an electrode assembly accommodated in the battery can even when heat is applied to the battery can, which may prevent a gas outlet formed at the top of the battery can from being blocked.

## Description

### TECHNICAL FIELD

### CROSS-REFERENCE TO RELATED APPLICATIONS

The present application claims priority to Korean Patent Application No. 10-2023-0102377 filed on August 4, 2023 in the Republic of Korea, the disclosures of which are incorporated herein by reference.

### TECHNICAL FIELD

The present disclosure relates to a cylindrical secondary battery, and more specifically, to a cylindrical secondary battery capable of suppressing the upward movement of an electrode assembly inside a battery can even when the battery can is heated.

### BACKGROUND ART

A secondary battery (rechargeable battery) is a battery that can be charged and discharged, unlike a primary battery that cannot be recharged. The secondary battery may have various shapes such as cylindrical, pouch and prismatic, and a cylindrical battery cell may be configured by interposing a separator between a positive electrode and a negative electrode, winding them to form an electrode assembly in the form of a jelly-roll, and then inserting the electrode assembly into the battery can and injecting an electrolyte solution. Here, since the electrode assembly should be inserted into the cylindrical battery can, it is formed in a smaller size than the battery can, and some gap may be formed between the inner wall of the battery can and the electrode assembly.

Meanwhile, various kinds of stability tests may be performed during the manufacture of cylindrical secondary batteries. In particular, cylindrical secondary batteries are frequently exposed to high-temperature heat sources, such as in the interior of vehicles or the like, and thus, during the manufacture of cylindrical secondary batteries, a burning test for inspecting the risk of explosion and self-extinguishing ability after heating the cylindrical secondary battery may be performed.

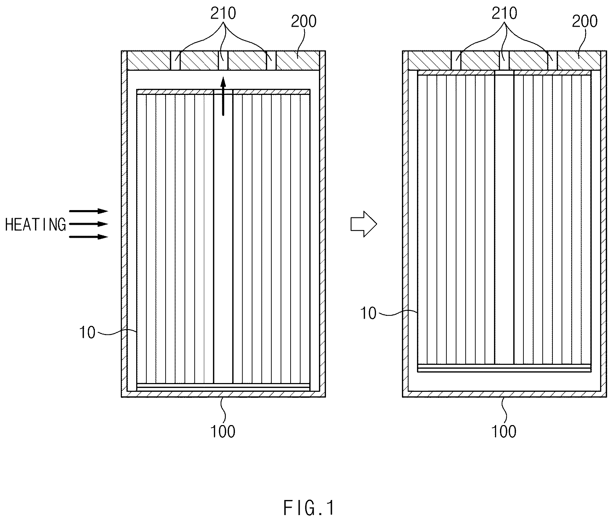

FIG. 1 is a view showing a state of heating a conventional cylindrical secondary battery. In this case, an electrode assembly 10 of the cylindrical secondary battery may receive heat and move inside a battery can 100, and in particular, the electrode assembly 10 may move to the top end portion of the battery can 100 to which a top cap assembly 200 is coupled.

Here, a gas outlet 210 for discharging gases generated inside the battery can 100 to the outside is formed in the top cap assembly 200, and the electrode assembly 10 receiving heat may move to the top end portion of the battery can 100 to block the gas outlet 210. In this case, the gas inside the battery can 100 cannot be discharged to the outside but accumulates, and thus there is a problem that the battery can 100 exposed to a high temperature environment explodes.

### SUMMARY

### TECHNICAL PROBLEM

The present disclosure is designed to solve the problems of the related art, and therefore the present disclosure is directed to providing a cylindrical secondary battery capable of preventing a gas outlet formed at the top of the battery can from being blocked by suppressing the upward movement of an electrode assembly accommodated in the battery can even when heat is applied to the battery can.

### TECHNICAL SOLUTION

A cylindrical secondary battery according to the present disclosure includes a battery can having an open top end portion; an electrode assembly accommodated in the battery can; a top cap assembly coupled to the top end portion of the battery can and formed with a gas outlet for discharging gases generated inside the battery can; and a thermal expansion tape attached to an upper region of the inner wall of the battery can and expanding when the battery can is heated.

The electrode assembly may be a jelly-roll in which a negative electrode plate, a positive electrode plate, and a separator are stacked and then wound in a cylindrical shape.

The thermal expansion tape may be attached to a first region facing the upper edge of the jelly-roll among the upper regions of the inner wall of the battery can.

The thermal expansion tape may be a ring-shaped tape that extends along the length direction of the first region.

The thermal expansion tapes may be a plurality of pad-shaped tapes that are spaced apart and attached along the length direction of the first region.

The pad-shaped tapes may be attached to face each other with the jelly-roll interposed therebetween.

The pad-shaped tapes may be spaced apart and attached at equal intervals along the length direction of the first region.

A beading portion in which a portion of the battery can is recessed inward may be formed below the top end portion of the battery can.

The thermal expansion tape may be attached to a region lower than a second region in which the beading portion is formed.

The thermal expansion tape may be attached to a region higher than the first region facing the upper edge of the jelly-roll among the upper regions of the inner wall of the battery can.

The thermal expansion tape may include a plurality of swelling layers that expand when an electrolyte penetrates or heat is applied.

The swelling layer may be composed of an aqueous self-healing binder having a glass transition temperature of -50 °C to -30 °C.

### ADVANTAGEOUS EFFECTS

A cylindrical secondary battery according to the present disclosure includes a battery can having an open top end portion, an electrode assembly accommodated in the battery can, a top cap assembly coupled to the top end portion of the battery can and formed with a gas outlet for discharging gases generated inside the battery can, and a thermal expansion tape attached to an upper region of the inner wall of the battery can and expanding when the battery can is heated, thereby suppressing the upward movement of an electrode assembly accommodated in the battery can even when heat is applied to the battery can, resulting in an advantageous effect of preventing a gas outlet formed at the top of the battery can from being blocked.

### BRIEF DESCRIPTION OF THE DRAWINGS

FIG. 1 is a cross-sectional view showing a state of heating a conventional cylindrical secondary battery.
FIG. 2 is a cross-sectional view showing a state of heating a cylindrical secondary battery according to Embodiment 1 of the present disclosure.
FIG. 3 is a perspective view showing the internal structure of a cylindrical secondary battery according to Embodiment 1 of the present disclosure.
FIG. 4a is a cross-sectional view showing a state in which one swelling layer is formed on a thermal expansion tape attached to a cylindrical secondary battery according to Embodiment 1 of the present disclosure.
FIG. 4b is a cross-sectional view showing a state in which multiple swelling layers are formed on a thermal expansion tape attached to a cylindrical secondary battery according to Embodiment 1 of the present disclosure.
FIG. 5 is a view showing a state in which a ring-shaped thermal expansion tape is attached to a cylindrical secondary battery according to Embodiment 1 of the present disclosure.
FIG. 6 is a view showing a state in which pad-type thermal expansion tapes are attached to a cylindrical secondary battery according to Embodiment 1 of the present disclosure.
FIG. 7a is a view showing a state in which pad-type thermal expansion tapes are attached at equal intervals to a cylindrical secondary battery according to Embodiment 1 of the present disclosure.
FIG. 7b is a plan view of FIG. 7a.
FIG. 8 is a cross-sectional view showing a cylindrical secondary battery according to Embodiment 2 of the present disclosure.
FIG. 9 is an enlarged view showing part P of FIG. 8.
FIG. 10 is a cross-sectional view showing a cylindrical secondary battery according to Embodiment 3 of the present disclosure.
FIG. 11 is a cross-sectional view showing a state in which a beading portion is formed in a cylindrical secondary battery according to Embodiment 3 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a cylindrical secondary battery according to the present disclosure will be described with reference to the drawings.

### Embodiment 1

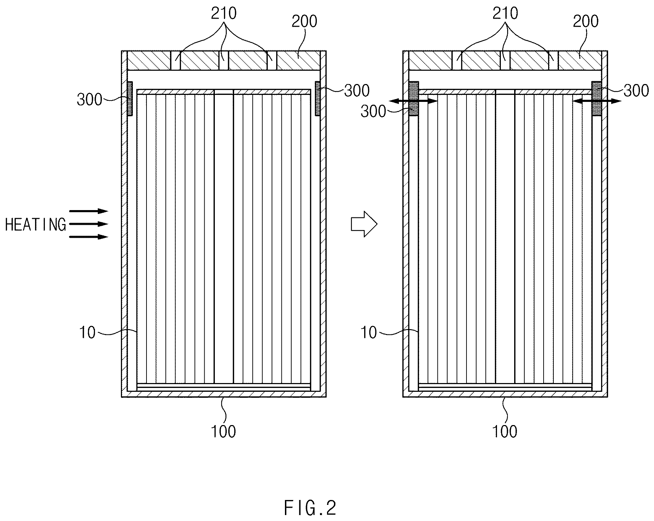

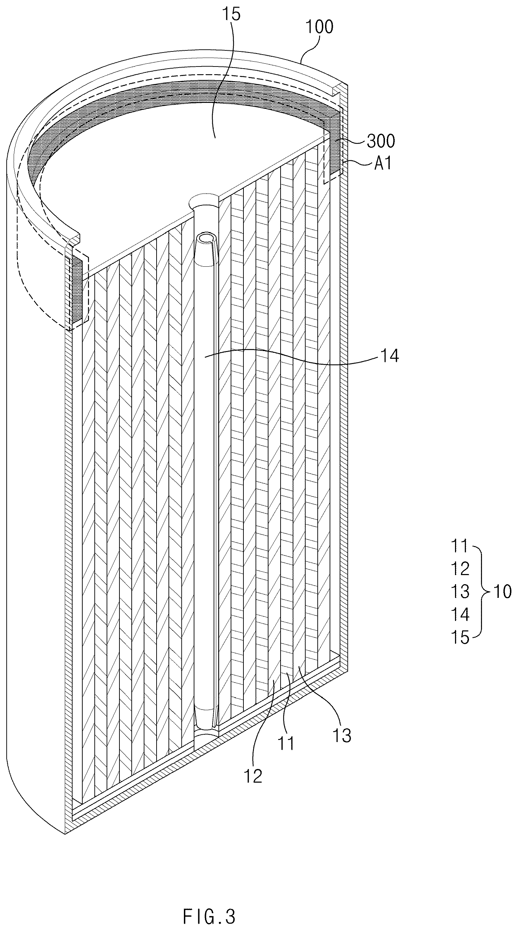

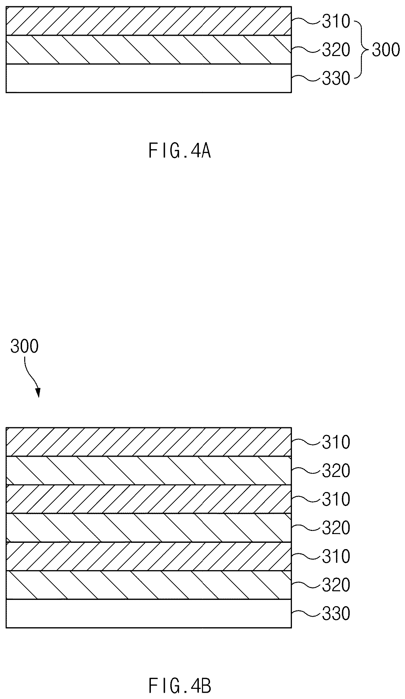

FIG. 2 is a cross-sectional view showing a state of heating a cylindrical secondary battery according to Embodiment 1 of the present disclosure, and FIG. 3 is a perspective view showing the internal structure of a cylindrical secondary battery according to Embodiment 1 of the present disclosure. FIG. 4a is a cross-sectional view showing a state in which one swelling layer is formed on a thermal expansion tape attached to a cylindrical secondary battery according to Embodiment 1 of the present disclosure, and FIG. 4b is a cross-sectional view showing a state in which multiple swelling layers are formed on a thermal expansion tape attached to a cylindrical secondary battery according to Embodiment 1 of the present disclosure.

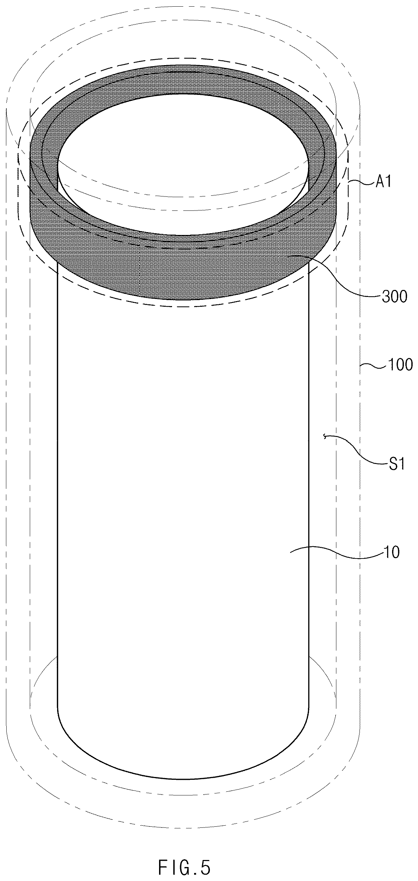

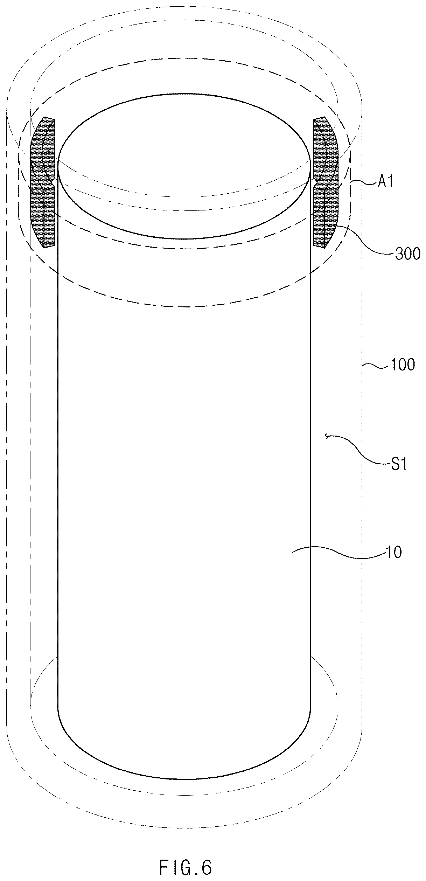

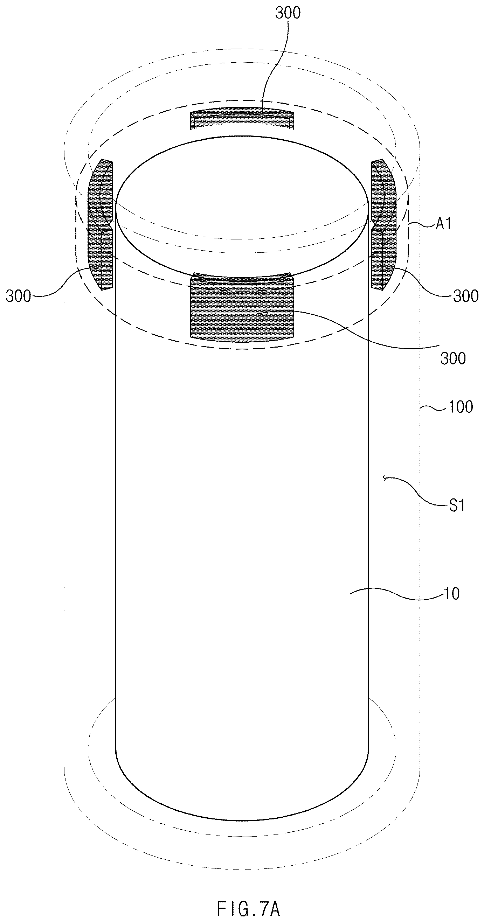

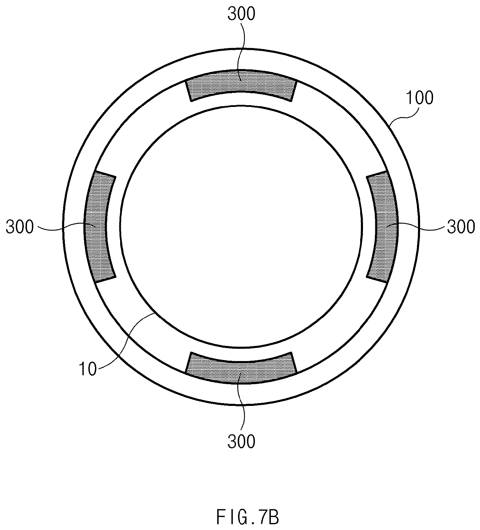

FIG. 5 is a view showing a state in which a ring-shaped thermal expansion tape is attached to a cylindrical secondary battery according to Embodiment 1 of the present disclosure, and FIG. 6 is a view showing a state in which pad-type thermal expansion tapes are attached to a cylindrical secondary battery according to Embodiment 1 of the present disclosure. FIG. 7a is a view showing a state in which pad-type thermal expansion tapes are attached at equal intervals to a cylindrical secondary battery according to Embodiment 1 of the present disclosure, and FIG. 7b is a plan view of FIG. 7a.

Referring to FIG. 2, the cylindrical secondary battery according to Embodiment 1 of the present disclosure may include a battery can 100 having an open top end portion, an electrode assembly 10 accommodated in the battery can 100, a top cap assembly 200 coupled to the top end portion of the battery can 100 and formed with a gas outlet 210 for discharging gases generated inside the battery can 100, and a thermal expansion tape 300 attached to an upper region of the inner wall of the battery can 100 and expanding when the battery can 100 is heated. The thermal expansion tape 300 attached to the upper region of the inner wall of the battery can 100 is made of a material that expands when heated, and thus the thickness thereof may increase when the battery can 100 is heated.

Therefore, when heat is applied to the battery can 100, the thermal expansion tape 300 increases in thickness in a direction from the inner wall of the battery can 100 toward the electrode assembly 10, and thus a frictional force may be applied to the electrode assembly 10 to block the upward movement of the electrode assembly 10. Here, the electrode assembly 10 exists in a state of being spaced apart from the top cap assembly 200 at the top end portion of the battery can 100, so that even when the battery can 100 is heated, there is an advantageous effect of preventing the electrode assembly 10 from blocking the gas outlet 210 formed in the top cap assembly 200.

The battery can 100 is a metal case forming a receiving space S1 for accommodating the electrode assembly 10, and a certain gap may exist between the electrode assembly 10 accommodated inside the receiving space S1 and the inner wall of the battery can 100. The receiving space S1 is a space for accommodating the electrode assembly 10, and the electrode assembly 10 may be impregnated with an electrolyte solution within the receiving space S1. There is no particular limitation on the structure or shape of the battery can 100, and as shown in FIG. 3, the battery can 100 may have a hollow cylindrical can structure for accommodating the electrode assembly 10.

The electrode assembly 10 is a power generation element capable of being charged and discharged, having a stacked structure of electrodes and separators, and may have a jelly-roll shape in which a negative electrode plate 11, a positive electrode plate 12, and a separator 13 are stacked and then wound in a cylindrical shape. The negative electrode plate 11 may include a negative electrode current collector and an active material applied to the negative electrode current collector. The negative electrode current collector may be a metal foil composed of copper (Cu) or nickel (Ni), and the active material applied to the negative electrode current collector may be artificial graphite, lithium, a lithium alloy, carbon, activated carbon, graphite, a silicon compound, a tin compound, a titanium compound, or an alloy thereof.

The positive electrode plate 12 may include a positive electrode current collector and an active material applied to the positive electrode current collector. The positive electrode current collector may be a foil made of aluminum, and the active material applied to the positive electrode current collector may be lithium manganese oxide, lithium cobalt oxide, lithium nickel oxide, lithium iron phosphate, or a compound including one or more of these.

The separator 13 may be made of an insulating material and may be alternately stacked with the negative electrode plate 11 and the positive electrode plate 12. For example, the separator 13 may be located between the negative electrode plate 11 and the positive electrode plate 12. Additionally, the separator 13 may be a multilayer film manufactured by polyethylene, polypropylene, or a combination thereof, or a solid polymer film such as polyvinylidene fluoride (PVDF), polyethylene oxide, or polyacrylonitrile (PAN).

Meanwhile, a cylindrical center pin 14 may be inserted into the winding core of electrode assembly 10 in the form of a jelly-roll. The center pin 14 may have a hollow rod structure in which a rigid plate made of metal is bent in a round shape. This center pin 14 may fix and support the electrode assembly, and may act as a passage for discharging the gas generated by an internal reaction of the electrode assembly 10 during operations such as charging and discharging. Specifically, the gas generated by the internal reaction may be discharged to the outside through an opening formed at the top end portion of the housing 15 of the electrode assembly 10 and the gas outlet 210 of the top cap assembly 200 coupled to the top end portion of the battery can 100.

The top cap assembly 200 is coupled to the open top end portion of the battery can 100, and the top cap assembly 200 and the top end portion of the battery can 100 may be coupled in various ways. For example, the top cap assembly 200 and the top end portion of the battery can 100 may be coupled by screwing or welding. Meanwhile, one or more gas outlets 210 for discharging high-pressure gas generated inside the electrode assembly 10 may be formed in the top cap assembly 200.

Meanwhile, as shown in FIGS. 4a and 4b, the thermal expansion tape 300 may be formed in a multilayer structure including one or more of a swelling layer 310, a base layer 320, and an adhesive layer 330. In this case, the swelling layer 310 is a layer capable of filling the gap between the inner wall of the battery can 100 and the electrode assembly 10 by swelling when it contacts the electrolyte or is heated, and may realize a volume increase rate of 100% or more. This swelling layer 310 may be composed of an aqueous self-healing binder having a glass transition temperature of -50 °C to -30 °C.

The aqueous self-healing binder is a polymer having a property of swelling by contact with an organic solvent included in the electrolyte or by heat, and may include at least one compound among arginate, chitosan, and ceramic matrix composite (CMC). In particular, the aqueous self-healing binder may include at least one compound selected from the group consisting of arginate and chitosan.

Arginate is a high molecular polymer and has excellent self-healing ability, so it may fill the internal gap upon impact, and thus when used as the swelling layer 310, it may effectively suppress the upward movement of the electrode assembly 10. Chitosan is an eco-friendly material, and has the advantage of not only low cost, but also being excellent in binding performance because it includes a large amount of hydroxyl groups. Therefore, when chitosan is used as the swelling layer 310, it has an advantageous effect of improving the adhesiveness of the swelling layer 310.

Meanwhile, the base layer 320 is a film or sheet-like layer having the property of expanding when in contact with a fluid like a liquid such as an electrolyte or the like, and may have a shape such as a circle, a triangle, or an amorphous shape in addition to a square. There is no particular limitation on the composition of the base layer 310, and the base layer 310 may be formed of at least one polymer material selected from polypropylene, polyamide, polycarbonate, polyacrylate, thermoplastic polyurethane (TPU), polyvinyl chloride, polyethylene terephthalate, and polystyrene.

The adhesive layer 330 is a layer added to easily attach and detach the thermal expansion tape 300 to and from the electrode assembly 100, and may be designed to implement an appropriate adhesive force and peeling force with respect to the electrode assembly 100. Specifically, the peeling force of the adhesive layer 330 may be changed depending on the size of the three-dimensional shape to be implemented or the gap to be filled, and the lower limit may be 100 gf/25 mm or more, 200 gf/25 mm or more, 400 gf/25 mm or more, 600 gf/25 mm or more, 800 gf/25 mm or more, 1,000 gf/25 mm or more, 1,200 gf/25 mm or more, 1,400 gf/25 mm or more, 1,600 gf/25 mm or more, or 1,800 gf/25 mm or more. Meanwhile, the upper limit of the peeling force of the adhesive layer 330 is not particularly limited as long as it has a general range, but may be approximately 5,000 gf/25 mm or less.

Such an adhesive layer 330 may include an acrylic polymer having a weight average molecular weight (Mw) of 400,000 or more. Specifically, the acrylic polymer may include a polymer in the form of a polymerization of a (meth)acrylic acid ester monomer and a copolymerizable monomer having a crosslinking functional group. In this case, the weight ratio of each monomer is not particularly limited, and may be appropriately designed in consideration of the intended peeling force.

Meanwhile, the thermal expansion tape 300 may be attached to a first region A1 facing the upper edge of the jelly-roll among the upper regions of the inner wall of the battery can 100. In this case, the thermal expansion tape 300 receives heat and swells in the first region A1, and thus it is possible to suppress the upward movement of the jelly-roll by pressing the jelly-roll in the horizontal direction.

The thermal expansion tape 300 may be attached to the upper region of the inner wall of the battery can 100 in various ways. For example, as shown in FIG. 5, the thermal expansion tape 300 may be a ring-shaped tape extending along the length direction of the first region A1. In this case, the thermal expansion tape 300 surrounds the upper edge of the jelly-roll in the first region A1, and thus the top end portion of the jelly-roll may be strongly pressed when the thermal expansion tape 300 swells, thereby having an advantageous effect of suppressing the upward movement of the jelly-roll.

Additionally, a portion of the ring-shaped thermal expansion tape 300 attached to a position higher than the top end portion of the jelly-roll may swell toward the central axis of the jelly-roll past the top end edge of the jelly-roll. In this case, the corresponding portion is located above the top end surface of the jelly-roll and functions as a blocking member for blocking the jelly-roll from moving upward, thereby having an advantageous effect of effectively preventing the jelly-roll from moving upward.

Meanwhile, as shown in FIG. 6, the thermal expansion tape 300 may be a plurality of pad-shaped tapes spaced apart and attached along the length direction of the first region A1. Here, the plurality of pad-shaped tapes may be attached to face each other with the jelly-roll interposed therebetween. Additionally, as shown in FIGS. 7a and 7b, the plurality of pad-shaped tapes may be spaced apart and attached at equal intervals along the length direction of the first region A1. In each case, a portion of the plurality of pad-shaped tapes attached to a position higher than the top end portion of the jelly-roll may swell toward the central axis of the jelly-roll past the top end edge of the jelly-roll. The corresponding portion is located above the top end surface of the jelly-roll and functions as a blocking member for blocking the jelly-roll from moving upward, thereby having an advantageous effect of effectively preventing the jelly-roll from moving upward.

### Embodiment 2

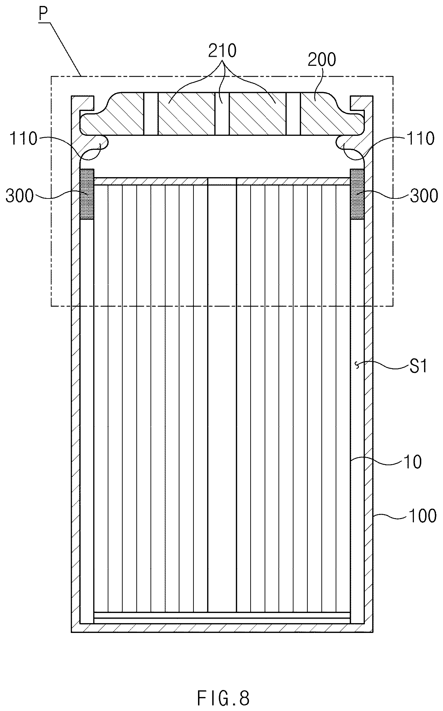

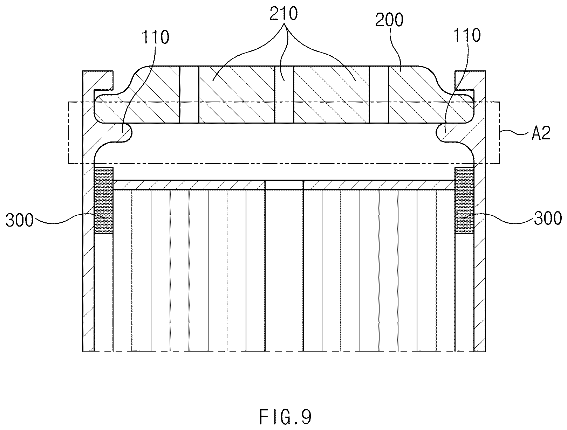

FIG. 8 is a cross-sectional view showing a cylindrical secondary battery according to Embodiment 2 of the present disclosure, and FIG. 9 is an enlarged view showing part P of FIG. 8.

Embodiment 2 of the present disclosure differs from Embodiment 1 in that a beading portion 110 in which a portion of the battery can 100 is recessed inward is formed in the battery can 100. Contents common to Embodiment 1 will be omitted as much as possible, and Embodiment 2 will be described focusing on differences. That is, it is obvious that contents not described in Embodiment 2 may be considered as contents of Embodiment 1 if necessary.

Referring to FIGS. 8 and 9, a cylindrical secondary battery according to Embodiment 2 of the present disclosure may have a beading portion 110. Specifically, the beading portion 110 is formed below the top end portion of the battery can 100 and may have a shape in which a portion of the battery can 100 is recessed inward.

The beading portion 110 is a separation preventing structure for preventing the top cap assembly 200 from being separated from the battery can 100, and this beading portion 110 may be formed by pressing the outer circumferential surface of the battery can 100 after the top cap assembly 200 is mounted on the battery can 100. The beading portion 110 may have a shape that protrudes from the inner surface of the battery can 100 toward the central axis of the battery can 100.

Meanwhile, the thermal expansion tape 300 may be attached to a region lower than a second region A2 in which the beading portion 110 is formed among the upper regions of the battery can 100. In particular, the thermal expansion tape 300 may be attached to a region facing the upper edge of the jelly-roll among the regions lower than the second region A2. The thermal expansion tape 300 surrounds the upper edge of the jelly-roll, and thus the top end portion of the jelly-roll may be pressed in the horizontal direction when the thermal expansion tape 300 swells. In this case, the upward movement of the jelly-roll is suppressed, which has an advantageous effect of preventing the beading portion located above the jelly-roll from being damaged due to the ascent of the jelly-roll.

Additionally, a portion of the thermal expansion tape 300 attached to a position higher than the top end portion of the jelly-roll may swell toward the central axis of the jelly-roll past the top end edge of the jelly-roll. The corresponding portion is located above the top end surface of the jelly-roll and functions as a blocking member for blocking the jelly-roll from moving upward, thereby effectively preventing the jelly-roll from moving upward. In this case, the jelly-roll is prevented from moving upward, which has an advantageous effect of preventing the beading portion located above the jelly-roll from being damaged due to the ascent of the jelly-roll.

### Embodiment 3

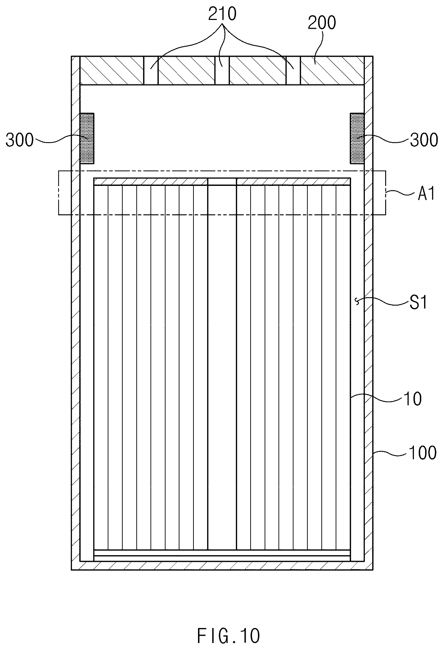

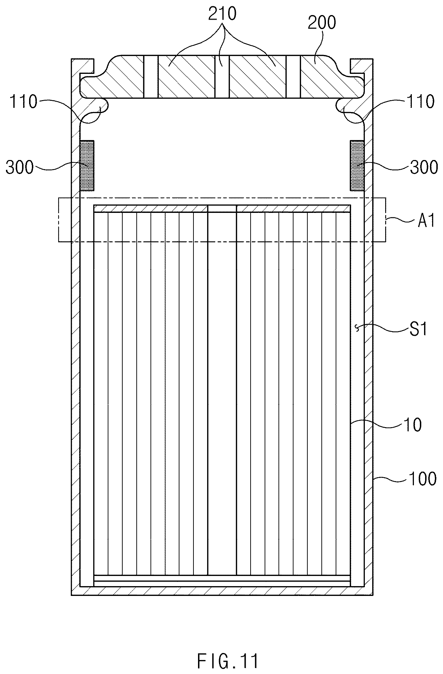

FIG. 10 is a cross-sectional view showing a cylindrical secondary battery according to Embodiment 3 of the present disclosure, and FIG. 11 is a cross-sectional view showing a state in which a beading portion is formed in a cylindrical secondary battery according to Embodiment 3 of the present disclosure.

Embodiment 3 of the present disclosure differs from Embodiments 1 and 2 in that the thermal expansion tape 300 is attached to a region higher than the first region A1 facing the upper edge of the jelly-roll among upper regions of the inner wall of the battery can 100. Contents common to Embodiments 1 and 2 will be omitted as much as possible, and Embodiment 3 will be described focusing on the differences. That is, it is obvious that contents not described in Embodiment 3 may be considered as contents of Embodiments 1 and 2 if necessary.

Referring to FIG. 10, a cylindrical secondary battery according to Embodiment 3 of the present disclosure may include a thermal expansion tape 300 attached to a region higher than the first region A1 facing the upper edge of the jelly-roll among upper regions of the inner wall of the battery can 100. Here, all portions of the thermal expansion tape 300 are attached to a position higher than the top end portion of the jelly-roll, so that when heat is transferred to the thermal expansion tape 300, the thermal expansion tape 300 may swell toward the central axis of the jelly-roll past the top end edge of the jelly-roll. In this case, the thermal expansion tape 300 is located above the top end surface of the jelly-roll and functions as a blocking member for blocking the jelly-roll from moving upward, thereby having an advantageous effect of effectively preventing the jelly-roll from moving upward.

Referring to FIG. 11, a beading portion 110 may be formed in the cylindrical secondary battery according to Example 3 of the present disclosure. The beading portion 110 is formed below the top end portion of the battery can 100 and may have a shape in which a portion of the battery can 100 is recessed inward. Here, the thermal expansion tape 300 may be attached to a region higher than the first region A1 facing the upper edge of the jelly-roll among regions lower than the region in which the beading portion is formed. The thermal expansion tape 300 is located above the top end surface of the jelly-roll and functions as a blocking member for blocking the jelly-roll from moving upward, thereby having an advantageous effect of preventing the beading portion located above the jelly-roll from being damaged due to the ascent of the jelly-roll.

Meanwhile, the thermal expansion tape 300 may include a multilayer swelling layer 310 that expands when an electrolyte penetrates or heat is applied. A plurality of swelling layers 310 may be formed in the thermal expansion tape 300, and a base layer 320 may be interposed between the swelling layers 310. According to the above structure in which the thermal expansion tape 300 has multiple layers, the thermal expansion tape 300 may be attached thickly in a region higher than the first region A1, and thus the thermal expansion tape 300 may be located above the top end surface of the jelly-roll when swelling, thereby blocking the upward movement of the jelly-roll.

Meanwhile, as described above in Embodiment 1 of the present disclosure, the swelling layer 310 may be composed of an aqueous self-healing binder having a glass transition temperature of -50 °C to -30 °C. In this case, the aqueous self-healing binder has high adhesiveness, which has an advantageous effect of omitting the use of an additional adhesive such as an acrylic pressure sensitive adhesive (PSA).

Additionally, the aqueous self-healing binder may completely fill the gap between the electrode assembly 10 and the battery can 100 due to its property of expanding by heat or impact. Therefore, when the battery can 100 is heated, the aqueous self-healing binder may swell and press the electrode assembly 10 in the horizontal direction, thereby preventing the upward movement of the electrode assembly 10. In this case, there is an advantageous effect of preventing the electrode assembly 10 from blocking the gas outlet 210 formed in the top cap assembly 200.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

**[List of Reference Numerals]**

| | | | |
|---|---|---|---|
| 10: | Electrode assembly | 11: | Negative electrode plate |
| 12: | Positive electrode plate | 13: | Separator |
| 14: | Center pin | 15: | Housing |
| 100: | Battery can | 110: | Beading portion |
| 200: | Top cap assembly | 210: | Gas outlet |
| 300: | Thermal expansion tape | 310: | Swelling layer |
| 320: | Base layer | 330: | Adhesive layer |
| S1: | Receiving space | A1: | First region |
| A2: | Second region | | |

## Claims

1. A cylindrical secondary battery comprising:
a battery can having an open top end portion;
an electrode assembly accommodated in the battery can;
a top cap assembly coupled to the top end portion of the battery can and formed with a gas outlet for discharging gases generated inside the battery can; and
a thermal expansion tape attached to an upper region of the inner wall of the battery can and expanding when the battery can is heated.

2. The cylindrical secondary battery according to claim 1,
wherein the electrode assembly is a jelly-roll in which a negative electrode plate, a positive electrode plate, and a separator are stacked and then wound in a cylindrical shape.

3. The cylindrical secondary battery according to claim 2,
wherein the thermal expansion tape is attached to a first region facing the upper edge of the jelly-roll among the upper regions of the inner wall of the battery can.

4. The cylindrical secondary battery according to claim 3,
wherein the thermal expansion tape is a ring-shaped tape that extends along the length direction of the first region.

5. The cylindrical secondary battery according to claim 3,
wherein the thermal expansion tapes are a plurality of pad-shaped tapes that are spaced apart and attached along the length direction of the first region.

6. The cylindrical secondary battery according to claim 5,
wherein the pad-shaped tapes are attached to face each other with the jelly-roll interposed therebetween.

7. The cylindrical secondary battery according to claim 5,
wherein the pad-shaped tapes are spaced apart and attached at equal intervals along the length direction of the first region.

8. The cylindrical secondary battery according to claim 1,
wherein a beading portion in which a portion of the battery can is recessed inward is formed below the top end portion of the battery can.

9. The cylindrical secondary battery according to claim 8,
wherein the thermal expansion tape is attached to a region lower than a second region in which the beading portion is formed.

10. The cylindrical secondary battery according to claim 2,
wherein the thermal expansion tape is attached to a region higher than the first region facing the upper edge of the jelly-roll among the upper regions of the inner wall of the battery can.

11. The cylindrical secondary battery according to claim 10,
wherein the thermal expansion tape comprises a plurality of swelling layers that expand when an electrolyte penetrates or heat is applied.

12. The cylindrical secondary battery according to claim 11,
wherein the swelling layer is composed of an aqueous self-healing binder having a glass transition temperature of -50 °C to -30 °C.
